# EUROPEAN PATENT SPECIFICATION

(11) **EP 2 445 716 B1**
(45) Date of publication and mention of the grant of the patent: **03.04.2013**
(21) Application number: 10727498.7
(22) Date of filing: 16.06.2010
(51) Int. Cl.: B32B 27/08, H01B 3/42, H01B 3/44, H05K 1/03

(54) **HIGH PERFORMANCE, HIGH TEMPERATURE LIGHTWEIGHT FILM, TAPE OR SHEATH FOR WIRE INSULATION**
LEICHTGEWICHTIGE HOCHTEMPERATURBESTÄNDIGE LEISTUNGSSTARKE FOLIE, BAND ODER UMMANTELUNG FÜR DRAHTISOLIERUNG
BANDE, GAINE OU FILM LÉGER HAUTE TEMPÉRATURE ET HAUTE PERFORMANCE POUR ISOLATION DE FILS MÉTALLIQUES

(30) Priority: 26.06.2009 GB 0911047; 05.08.2009 GB 0913634
(43) Date of publication of application: 02.05.2012
(73) Proprietor: Tyco Electronics UK Ltd., Swindon, Wiltshire SN3 5HH (GB)
(72) Inventor: PAGLIUCA, Antonio, Oxforshire OX28 2EQ (GB); HAMMOND, Philip, Wiltshire SN4 8BJ (GB)
(74) Representative: Bankes, Stephen Charles Digby
(86) International application number: PCT/GB2010/051000
(87) International publication number: WO 2010/149994

(56) References cited:
- EP-A1- 0 572 177
- WO-A1-2009/032290
- DE-A1- 3 632 883
- US-A- 5 393 929

## Description

This invention relates to lightweight, high performance, high temperature and fire resistant films or tapes, in particular for use as insulation for wires and cables to be used in a wide variety of environments, including demanding conditions such as in drilling or mining, commercial or military aerospace and marine applications and automotive, rail and mass transport. Such cables may be exposed to high or low temperatures as well as to corrosive substances or atmospheres or to fire. High performance wires generally comprise a functional core such as an electrical conductor or optical fibre, and one or more insulating and/or protective coatings. These coatings should be flexible and not too bulky, since wires are required in many cases to be of light weight and small diameter.

Various types of polymer are known for use in wire and cable sheaths, such as polytetrafluoroethylene (PTFE) and polyetheretherketone (PEEK). PTFE has the advantage of being very tough as well as chemically inert, with a high softening point, low coefficient of friction and good electrical insulating properties.

PEEK has found increasing use in wire and cable sheathing since it has good flame resistance, being self extinguishing with very low smoke. It also has good elongation, good flexibility in thin sections such as films and good mechanical resistance to dynamic cut-through and scrape abrasion. It can however be susceptible to arc tracking and also to attack by acetone and strong acids.

EP-A-572177 discloses an electrical insulation laminate of porous PTFE and PEEK. The purpose of this is to provide a flexible electrical insulation material for air frame wire insulation which is lightweight with high mechanical strength, thermal resistance and chemical resistance and reduced dielectric constant.

There remains however a demand for wire and cables that are thin and lightweight, with insulations that are resistant to fire as well as to high temperatures and other hostile conditions. One way of imparting such flame resistance is to apply a coating comprising mica particles, typically platelets, dispersed in a polymer matrix. JP-A-2003100149 for example discloses the use of a dispersion of fine mica power and glass frit in a silicone resin for coating fire resistant cables. Mica can however add to the cost and accordingly there is a need to reduce or avoid mica content.

Our copending patent application GB 0810294.9, filed on 5th June 2008, discloses and claims a wire or cable comprising a core and a polymeric sheath, including a wrapped film of PEEK, or a polymer blend or alloy of PEEK containing at least 30% by weight of PEEK and another polymer, having a thickness of 5 to 150 µm. The PEEK layer may be combine with a fire resistant layer of a polymer matrix in which mica particles are disposed, and may also have a protective outer layer, for example a fluoropolymer such as PTFE.

The present invention provides a sheath for a high performance, high temperature wire comprising an inner layer of PTFE, a middle layer of a polymeric film containing aromatic and/or heterocyclic rings and a sintered outer layer of PTFE, the thickness of each layer being in the range of 12 to 100 µm.

The insulation may comprise a laminated tape to be wound around a wire, or may be extruded directly onto the wire, at least the outer layer of PTFE being sintered in situ. The insulation layers are preferably wrapped spirally around the core, preferably with an overlap of 25 to 65%, more preferably 40 to 55%. The layers may be applied individually or using a laminate of two or three of the layers. The preferred overlap angle is 43° to 55°.

The middle layer may for example contain a polyaryl ether ketone (PAEK) or a polymer comprising nitrogen, sulphur and/or oxygen-containing heterocyclic rings. Preferred heterocyclic polymers include those comprising a six-membered ring fused with a five-membered ring, such as polybenzimidazole, polybenzoxazole and polybenzothiazole, and blends or alloys of these compounds.

The preferred PAEK is polyetherether ketone (PEEK), but other PAEKs can be used, alone or in blends or alloys for example polyether ketones (PEK), polyether ketone ether ketone ketones (PEKEKK) and polyether ketone ketones (PEKK).

The sintering of the outer PTFE layer fusion-bonds the whole composite together in a sealed construction, providing superior chemical resistance in addition to the excellent mechanical properties imparted by the PAEK layer. Sintering takes place at a temperature in the range from 350 to 420°C. All three insulation layers may be sintered. PEEK typically melts at around 343°C Sintering causes the PTFE to shrink, thereby providing a highly compact sheath of insulating material. The residence time for sintering is 30 seconds to 2 minutes, preferably 60 to 90 seconds.

According to a further aspect of the invention, there is provided a three-layer composite insulating film or tape construction comprising a first layer of polytetrafluoroethylene (PTFE), an intermediate second layer of a polymer containing aromatic and/or heterocyclic rings, and a third layer of PTFE.

The preferred thickness for each of the layers is 25 to 75 µm. By means of the invention therefore there can be made a very thin, very lightweight wire of relatively inexpensive materials that nonetheless has excellent mechanical properties as well as being resistant to high temperature and chemical attack.

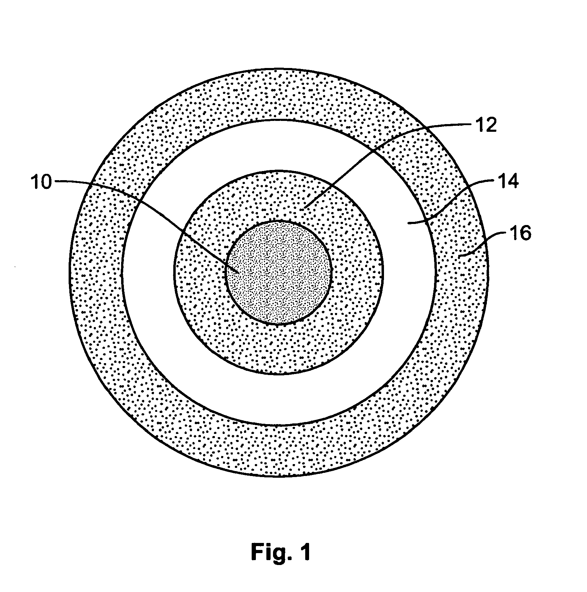

The accompanying drawing is an enlarged cross sectional view of an insulated wire having a 3-layer sheath in accordance with the invention. The insulated wire comprises a core conductor 10 which may be a single or multifilament conductive metallic core, for example of copper, aluminium, silver or steel. For other purposes, the core could instead be a polymeric, carbon fibre or ceramic core.

Around the core is an inner layer 12 of PTFE, preferably having a thickness of 25 to 75 µm. This helps to provide the electrical insulation in the case of a conductive metallic core. Being very tough and with a low coefficient of friction, the inner layer can be relied on to protect the core even when the wire is subjected to stresses which might damage insulating layers of other materials. The electrical protection imparted by this layer includes resistance to dry/wet arc tracking.

Around the inner PTFE layer is an intermediate layer 14 of an aryl or heterocyclic ring-containing polymer such as a polyaryl ether ketone, preferably polyetherether ketone (PEEK). This has a thickness in the range from 12 to 100 µm, preferably 25 to 75 µm. This layer provides excellent mechanical properties such as resistance to scrape and dynamic cut-through.

Around the PEEK layer is a final outer layer 16 of sintered PTFE. This provides both electrical and chemical resistance. Having a PTFE outer layer allows the whole construction to be sintered. The PEEK layer may undergo flow and alloying during sintering, which may enhance the properties of all three layers.

Applying thin films to make up an insulated wire according to the invention allows for a compact, thin and lightweight insulation to be produced.

The wire illustrated can be produced by wrapping individual layers, wrapping a laminated composite film of two or three layers or by extrusion of the three protective layers, followed by sintering. The sintering gives rise to an unexpected synergistic enhancement of the properties of the individual layers.

The following example illustrates the manufacture of a high performance, high temperature lightweight wire in accordance with the present invention.

Three successive layers were spirally wound from tape onto a nickel coated copper wire comprising 22 awg copper. First, an inner layer of PTFE was wound from a Lenzing LD-PTFE tape having a width of 4.0 mm and a thickness of 48 µm was spirally wound with an overlap angle of 45° to 55°.

To form an intermediate layer, a PEEK tape (APTIV 1,000) tape having a width of 6.0 mm and a thickness of 45 µm was wound in the opposite direction to the inner layer, again at an overlap angle of 45 to 55 .

Finally an outer layer was wound over the intermediate layer from a 3P 500 grade PTFE tape having a width of 6.5 mm and thickness of 50 µm, in the same winding direction as the inner layer and again with an overlap angle of 45° to 55°.

The three layer composite thus formed was then sintered at a temperature at 400°C with a residence time of 60 to 90 seconds, to form a lightweight, high performance, high temperature.

## Claims

1. A wire or cable comprising a core and an insulating polymeric sheath, wherein said sheath includes an inner layer of polytetrafluoroethylene (PTFE) having a thickness of 12 to 100 µm, an intermediate layer around the inner layer comprising a polymer containing aromatic and/or heterocyclic rings, having a thickness of 12 to 100 µm and a sintered outer layer of PTFE having a thickness of 12 to 100 µm.

2. A wire or cable according to claim 1 wherein the intermediate layer comprises a polyaryl ether ketone (PAEK) or a blend or alloy thereof.

3. A wire or cable according to claim 2 wherein the PAEK intermediate layer comprises polyether ether ketone (PEEK) or a blend or alloy thereof.

4. A wire or cable according to claim 1 wherein the intermediate layer comprises a polymer of heterocyclic units containing a six-membered ring fused with a five-membered ring.

5. A wire or cable according to claim 4 wherein the intermediate layer comprises units of polybenzimidazole, polybenzoxazole and/or polybenzothiazole.

6. A wire or cable according to any preceding claim wherein the intermediate layer film has a thickness of 25 to 75 µm.

7. A wire or cable according to claim 6 wherein each of the three layers around the core has a thickness of 25 to 75 µm.

8. A wire or cable according to any preceding claim wherein the intermediate and/or inner layers of the sheath are sintered.

9. A wire or cable according to any preceding claim wherein the core is a conductive metallic core.

10. A wire or cable according to claim 9 wherein the core is of copper, aluminium, silver or steel.

11. A wire or cable according to any one of claims 1 to 8 wherein the core is a polymeric, carbon fibre or ceramic core.

12. A wire or cable according to any preceding claim wherein each of said layers is an individually wrapped layer.

13. A wire or cable according to any one of claims 1 to 11 wherein two or three of said insulating layers are applied in the form of a laminated composite film.

14. A wire or cable according to claim 12 or claim 13 wherein said insulating layers and/or laminated composite film are spirally wound onto the core with an overlap of 25 to 60 %.

15. A wire or cable according to any one of claims 1 to 11 wherein the insulating layers are formed by extrusion.

16. A method of making an insulated wire or cable which comprises the steps of spirally winding onto an elongate core an inner layer of polytetrafluoroethylene (PTFE) having a thickness of 12 to 100 µm, an intermediate layer of polyetherether ketone (PEEK) having a thickness of 12 to 100 µm and an outer layer of PTFE having a thickness of 12 to 100 µm, and sintering at least said outer layer at a temperature in a range from 350 to 420°C with a residence time of 30 seconds to 2 minutes.

17. A composite insulating film or tape construction comprising a first layer of polytetrafluoroethylene (PTFE), an intermediate second layer of a polymer containing aromatic and/or hererocyclic rings and a third layer of PTFE, each said layer having a thickness of 12 to 100 µm.

## Patentansprüche

1. Draht oder Kabel, der/das einen Kern und eine isolierende polymere Ummantelung umfasst, wobei die Ummantelung eine Innenschicht aus Polytetrafluorethylen (PTFE), die eine Dicke von 12 bis 100 µm aufweist, eine Zwischenschicht um die Innenschicht, die ein aromatische und/oder heterocyclische Ringe enthaltendes Polymer umfasst und eine Dicke von 12 bis 100 µm aufweist, und eine gesinterte Außenschicht aus PTFE, die eine Dicke von 12 bis 100 µm aufweist, umfasst.

2. Draht oder Kabel nach Anspruch 1, wobei die Zwischenschicht ein Polyaryletherketon (PAEK) oder eine Mischung oder Legierung davon umfasst.

3. Draht oder Kabel nach Anspruch 2, wobei die PAEK-Zwischenschicht Polyetheretherketon (PEEK) oder eine Mischung oder Legierung davon umfasst.

4. Draht oder Kabel nach Anspruch 1, wobei die Zwischenschicht ein Polymer heterocyclischer Einheiten umfasst, die einen sechsgliedrigen Ring enthalten, der mit einem fünfgliedrigen Ring anelliert ist.

5. Draht oder Kabel nach Anspruch 4, wobei die Zwischenschicht Einheiten von Polybenzimidazol, Polybenzoxazol und/oder Polybenzothiazol umfasst.

6. Draht oder Kabel nach einem der vorhergehenden Ansprüche, wobei die Zwischenschichtfolie eine Dicke von 25 bis 75 µm aufweist.

7. Draht oder Kabel nach Anspruch 6, wobei jede der drei Schichten um den Kern eine Dicke von 25 bis 75 µm aufweist.

8. Draht oder Kabel nach einem der vorhergehenden Ansprüche, wobei die Zwischen- und/oder Innenschichten der Ummantelung gesintert sind.

9. Draht oder Kabel nach einem der vorhergehenden Ansprüche, wobei der Kern ein leitfähiger Metallkern ist.

10. Draht oder Kabel nach Anspruch 9, wobei der Kern aus Kupfer, Aluminium, Silber oder Stahl besteht.

11. Draht oder Kabel nach einem der Ansprüche 1 bis 8, wobei der Kern ein polymerischer, Kohlenstofffaser- oder Keramikkern ist.

12. Draht oder Kabel nach einem der vorhergehenden Ansprüche, wobei jede der Schichten eine einzeln gewickelte Schicht ist.

13. Draht oder Kabel nach einem der Ansprüche 1 bis 11, wobei zwei oder drei der isolierenden Schichten in Form einer laminierten Verbundstofffolie aufgebracht sind.

14. Draht oder Kabel nach Anspruch 12 oder Anspruch 13, wobei die Isolierschichten und/oder die laminierte Verbundstofffolie auf den Kern mit einer Überlappung von 25 bis 60 % spiralgewickelt sind.

15. Draht oder Kabel nach einem der Ansprüche 1 bis 11, wobei die Isolierschichten durch Extrudieren gebildet werden.

16. Verfahren zur Herstellung eines isolierten Drahts oder isolierten Kabels, das die Schritte umfasst des spiralen Wickelns auf einen länglichen Kern einer Innenschicht aus Polytetrafluorethylen (PTFE), die eine Dicke von 12 bis 100 µm aufweist, einer Zwischenschicht aus Polyetheretherketon (PEEK), die eine Dicke von 12 bis 100 µm aufweist, und einer Außenschicht aus PTFE, die eine Dicke von 12 bis 100 µm aufweist, und des Sinterns mindestens der Außenschicht bei einer Temperatur in einem Bereich von 350 bis 420 °C bei einer Aufenthaltszeit von 30 Sekunden bis 2 Minuten.

17. Verbundstoffisolierfolie oder Bandkonstruktion umfassend eine erste Schicht aus Polytetrafluorethylen (PTFE), eine zweite Zwischenschicht aus einem Polymer, das aromatische und/oder heterocyclische Ringe enthält, und eine dritte Schicht aus PTFE, wobei jede Schicht eine Dicke von 12 bis 100 µm aufweist.

## Revendications

1. Fil ou câble comprenant une âme et une gaine polymère isolante, dans lequel ladite gaine comprend une couche interne de polytétrafluoroéthylène (PTFE) ayant une épaisseur de 12 à 100 µm, une couche intermédiaire autour de la couche interne comprenant un polymère contenant des cycles aromatiques et/ou hétérocycliques, ayant une épaisseur de 12 à 100 µm et une couche externe frittée de PTFE ayant une épaisseur de 12 à 100 µm.

2. Fil ou câble selon la revendication 1, dans lequel la couche intermédiaire comprend une polyaryl éther cétone (PAEK) ou un mélange ou son alliage.

3. Fil ou câble selon la revendication 2, dans lequel la couche intermédiaire en PAEK comprend de la polyéther éther cétone (PEEK) ou un mélange ou son alliage.

4. Fil ou câble selon la revendication 1, dans lequel la couche intermédiaire comprend un polymère de motifs hétérocycliques contenant un cycle à six chaînons condensé à un cycle à cinq chaînons.

5. Fil ou câble selon la revendication 4, dans lequel la couche intermédiaire comprend des motifs de polybenzimidazole, de polybenzoxazole et/ou de polybenzothiazo le.

6. Fil ou câble selon l'une quelconque des revendications précédentes, dans lequel le film de couche intermédiaire a une épaisseur de 25 à 75 µm

7. Fil ou câble selon la revendication 6, dans lequel chacune des trois couches autour de l'âme a une épaisseur de 25 à 75 µm.

8. Fil ou câble selon l'une quelconque des revendications précédentes, dans lequel les couches intermédiaires et/ou internes de la gaine sont frittées.

9. Fil ou câble selon l'une quelconque des revendications précédentes, dans lequel l'âme est une âme métallique conductrice.

10. Fil ou câble selon la revendication 9, dans lequel l'âme est en cuivre, en aluminium, en argent ou en acier.

11. Fil ou câble selon l'une quelconque des revendications 1 à 8, dans lequel l'âme est une âme à base de polymère, de fibre de carbone ou en céramique.

12. Fil ou câble selon l'une quelconque des revendications précédentes, dans lequel chacune desdites couches est une couche enveloppée individuellement.

13. Fil ou câble selon l'une quelconque des revendications 1 à 11, dans lequel deux ou trois desdites couches isolantes sont appliquées sous la forme d'un film composite stratifié.

14. Fil ou câble selon la revendication 12 ou la revendication 13, dans lequel lesdites couches isolantes et/ou ledit film composite stratifié sont enroulé(e)s en spirale autour de l'âme avec un chevauchement de 25 à 60 %.

15. Fil ou câble selon l'une quelconque des revendications 1 à 11, dans lequel les couches isolantes sont formées par extrusion.

16. Procédé de fabrication d'un fil ou d'un câble isolé qui comprend les étapes d'enroulement en spirale sur une âme allongée d'une couche interne de polytétrafluoroéthylène (PTFE) ayant une épaisseur de 12 à 100 µm, d'une couche intermédiaire de polyéther éther cétone (PEEK) ayant une épaisseur de 12 à 100 µm et d'une couche externe de PTFE ayant une épaisseur de 12 à 100 µm, et de frittage d'au moins ladite couche externe à une température située dans la plage de 350 à 420°C avec un temps de résidence de 30 secondes à 2 minutes.

17. Film isolant composite ou construction sous forme de bande comprenant une première couche de polytétrafluoroéthylène (PTFE), une seconde couche intermédiaire d'un polymère contenant des cycles aromatiques et/ou hétérocycliques et une troisième couche de PTFE, chacune desdites couches ayant une épaisseur de 12 à 100 µm
